# EUROPÄISCHE PATENTSCHRIFT

(11) **EP 0 678 422 B1**
(45) Veröffentlichungstag und Bekanntmachung des Hinweises auf die Patenterteilung: **25.08.1999**
(21) Anmeldenummer: 94111342.5
(22) Anmeldetag: 21.07.1994
(51) Int. Cl.: B60R 13/01, B60R 13/02, B60R 13/08

(54) **Ausbausatz aus faserverstärkten Kunststoffen für Transport-Systeme**
Lining segments made of fibre reinforced plastics for transportsystems
Segments de revêtement en matériaux plastiques renforcés par des fibres pour systèmes de transport

(30) Priorität: 19.04.1994 DE 4413142
(43) Veröffentlichungstag der Anmeldung: 25.10.1995
(73) Patentinhaber: Hahlbrock GmbH, D-31515 Wunstorf (DE)
(72) Erfinder: Hahlbrock, Lothar, D-31515 Wunstorf (DE)
(74) Vertreter: Cohausz & Florack

(56) Entgegenhaltungen:
- GB-A- 2 128 152
- US-A- 2 356 008
- US-A- 3 637 252
- US-A- 4 893 862
- US-A- 4 917 431
- US-A- 4 986 590
- US-A- 5 020 846
- US-A- 5 139 300

## Beschreibung

Die Erfindung betrifft einen Ausbausatz aus faserverstärkten Kunststoffen für Transportsysteme gemäß den Merkmalen des Oberbegriffes von Anspruch 1.

Es sind Lösungsansätze für Innenverkleidungen von Kraftfahrzeuge bekannt, die sich mit Detailproblemen beschäftigen. So wird eine Variante beschrieben, die mit einem ihrer Endabschnitte in die Aufnahme eines mittig verlaufenden Dachträgers eingeschoben ist und mit ihrem anderen Endabschnitt entlang eines seitlichen Dachrahmens unter Einbindung von Schrauben in ihrer Lage gehalten wird. Ein wesentlicher Nachteil ist hierbei, daß der freie Zugang zu einem hinter der Innenverkleidung liegenden Raum nur dann möglich ist, wenn die gesamte Innenverkleidung vom Fahrzeug gelöst wird. Dieser Prozeß ist aufwendig und im Regelfall nur von Spezialisten durchführbar. Ein teilweiser Aus- und Einbau ist nicht möglich

Bei einer verbesserten Variante dieser Detaillösung wird eine Innenverkleidung für ein Transportsystem, wie z.B. Fahrzeug, beschrieben, welches die Aufbaubereiche abdeckt und wenigstens an einem Endabschnitt gehalten ist. Hierbei werden zwecks Erleichterung der Montage bzw. reparaturbedingten Einbauten bestimmte Bereiche der Innenverkleidung schwenkbar ausgebildet, wobei an einem Endabschnitt ein Scharnier und an einem zweiten gegenüberliegenden Endabschnitt eine schnell trennbare Halteeinrichtung vorgesehen ist.

Eine Problemlösung für die schnelle Montage und Demontage bei einer Gesamtinnenverkleidung kann auch hier nicht erkannt werden. Zumal die Kosten hier indiskutabel hoch sind.

Bekannt sind auch Innenabdeckteile für Karosserieelemente, z.B. Blechteile von Kraftfahrzeugen. Hierbei handelt es sich im Regelfall um Blechteile im Bereich des Armaturenbretts, an Türsäulen, Fenstersäulen usw. Derartige Abdeckelemente sind üblicherweise aus Kunststoff im Tiefziehverfahren oder im Spritzgußverfahren hergestellt. Benutzt werden hierzu relativ harte Kunststoffe auf der Basis von Polyolefinen, Acryl-Butadien-Styrol-Mischpolymerisate oder ähnliche Stoffe.

Die Teile werden üblicherweise durch Abstützelemente und Nieten bzw. Schrauben mit den Blechteilen verbunden. Die Innenabdeckteile sind hierbei vergleichsweise starr, so daß eine zusätzliche Behandlung erforderlich ist. Zur Verbesserung des Oberflächenfinish werden besondere Wachsüberzüge, z.B. Softfeeling-Lacke, vorgeschlagen. Andere Lösungen sind Kaschierungen mit z.T. hinterschäumten Folien oder mechanisch weichen Zwischenschichten. Diese Techniken sind jedoch sehr aufwendig, teuer und wenig anpassungsfähig.

Bei anderen beschriebenen Problemlösungen werden die Elastizität oder Nachgiebigkeit des Innenabdeckteils durch eine besondere konstruktive Gestaltung der Stege und Vorsprünge und nicht durch die stoffliche Zusammensetzung verbessert bzw. bestimmt. Die konstruktive Anordnung der Vorsprünge und Stege erlaubt eine weitgehende Anpassungsfähigkeit. Die Elastizität und Nachgiebigkeit des Innenabdeckteils kann örtlich, auf kleinem Raum, variiert werden. Im Einzelfall können Höhe, Abstand, Form und Verteilung der Vorsprünge von Ort zu Ort unterschiedlich definiert werden, so daß man jede gewünschte Nachgiebkeit bzw. ein erstrebtes Elastizitätsprofil realisieren kann. Der konstruktive Aufwand bei diesen Lösungen ist sehr hoch. Darüber hinaus besteht kaum eine Möglichkeit, bei geänderten Kfz-bzw. Raumvarianten bei Reparaturen usw.derartige Lösungen - ohne teure konstruktive Anpassungsarbeiten - einzusetzen.

Die US-A-4 917 431 beschreibt als nächstliegender Stand der Technik einen Ausbausatz für die Ladefläche von Kraftfahrzeugen, der eine Vielzahl von Polyethylenplatten für Boden, Seitenwände, Türen und Dach enthält. Jede der Wandanordnungen schließt vertikal voneinander beabstandete Rippen ein, die sich längs der Anordnungen erstrecken und derselben Festigkeit verleihen. Die Befestigung erfolgt mit Metallschrauben an den Wänden des Kraftfahrzeugs. Die GB-A-2 128 152 beschreibt eine Innenauskleidung für ein Dach oder Fahrzeugwände mit überlappenden Bestandteilen, deren überlappende Bestandteile miteinander befestigt sind. Zur Befestigung der Auskleidungsteile an der Karosserie werden Nieten vorgeschlagen.

Aus der US-A-2 356 008 ist es bekannt, synthetische Materialien zum Ausbau von Kraftfahrzeugen zu verwenden.

Der Erfindung liegt die Aufgabe zugrunde, eine montagefreundliche, den Hygienebestimmungen entsprechende Innenauskleidung aus Kunststoff, beispielsweise für Frischdienstfahrzeuge bereitzustellen, die einen zerstörungsfreien Ein- und Ausbau ermöglicht und dadurch Mehrfachnutzung der Einzelelemente gestattet, wobei die Befestigung an der Karosserie weitestgehend auf konstruktiv vorgegebene Befestigungsstellen zurückgreift und somit den Montageaufwand verringert und die Schaffung zusätzlicher Schwachstellen (mechanisch und korrosiv) minimiert.

Gelöst wird diese Aufgabe durch einen Ausbausatz gemäß den Merkmalen des kennzeichnenden Teils von Anspruch 1.

In den Zeichnungen sind Ausführungsbeispiele der Erfindung dargestellt.

Es zeigen:
- Fig. 1:: Stilisierte, perspektivische Darstellung eines Transporter-Innenraumes
- Fig. 2:: Vertikaler Schnitt durch Ausbausatz und Karosserie
- Fig. 3:: Schnitt durch eine Seitenwand

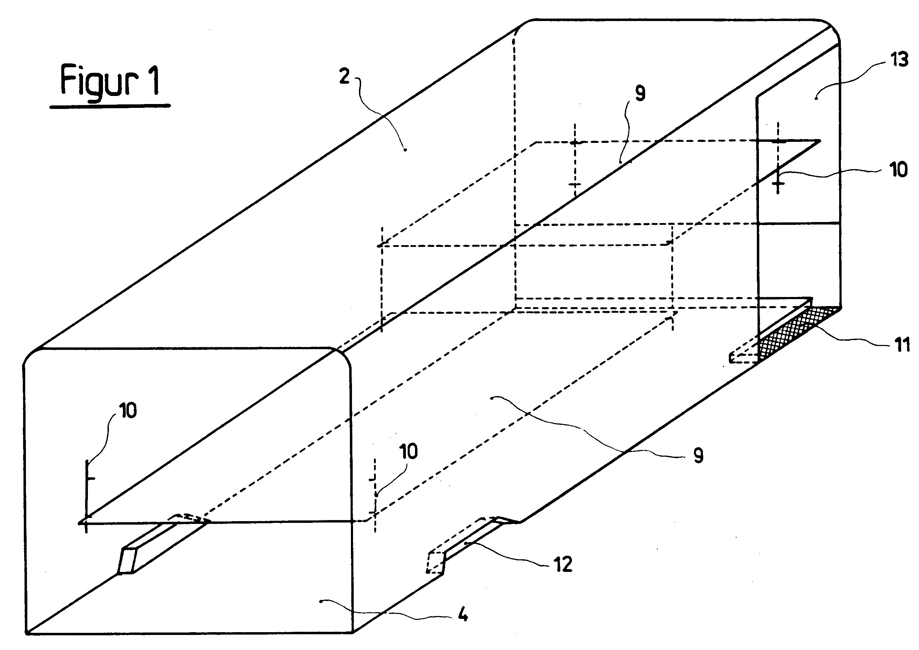

In Fig. 1 ist die gesamte Raumsituation zu erkennen. Die obere Begrenzung wird durch das Himmelelement (2) gebildet. Alle Einlegeböden (9) sind höhenverstellbar durch die Auflagen (10) fixiert. Die Radkästen (12) ragen nur geringfügig in den Bereich des Bodens (4) hinein. Der rechts oben gelegene Türausschnitt (13) wird unten durch das Einstiegselement (11) begrenzt, dessen Oberfläche zur Erhöhung der Rutschsicherheit mit definierten Oberflächenstrukturen versehen ist.

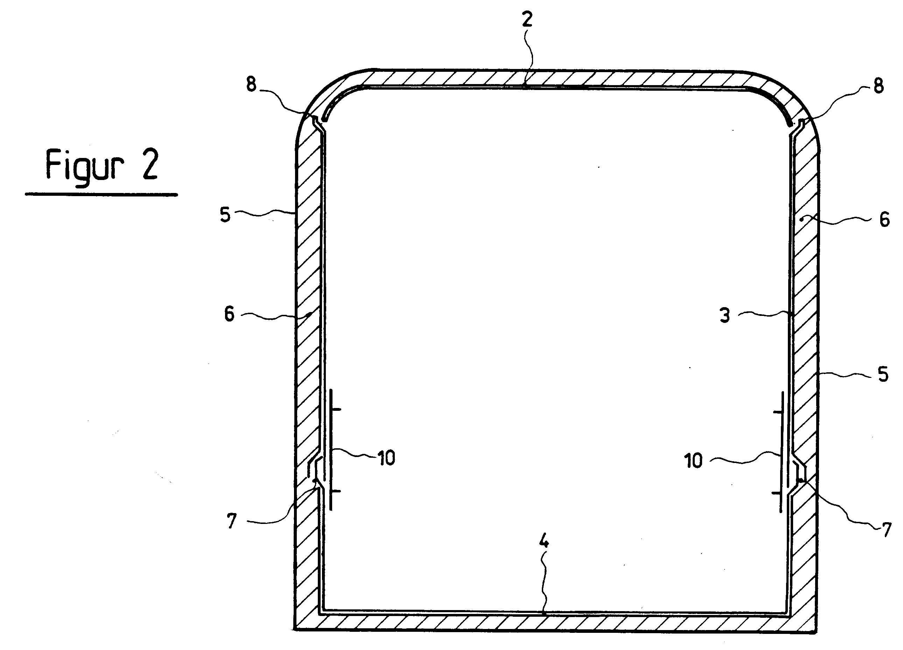

Der Schnitt in Fig. 2 stellt die äußere Begrenzung durch die Karosserie (5) sowie die zusammengefügten Einzelelemente Boden (4), Seitenteile (3) sowie Himmel (2) dar. Spritzschutz wird z.B. durch die Überlappung (8) realisiert. Mittels der Steck - Klemmverbindung (7) sind Seitenteile (3) und Boden (4) miteinander lösbar verbunden. Auflagen (10) zur Fixierung der Einlegeböden sind seitlich befestigt. Zwischen den Innenelementen (2,3,4) und der Karosserie (5) befindet sich eine Isolierung (6), z.B. aus Hartschaum.

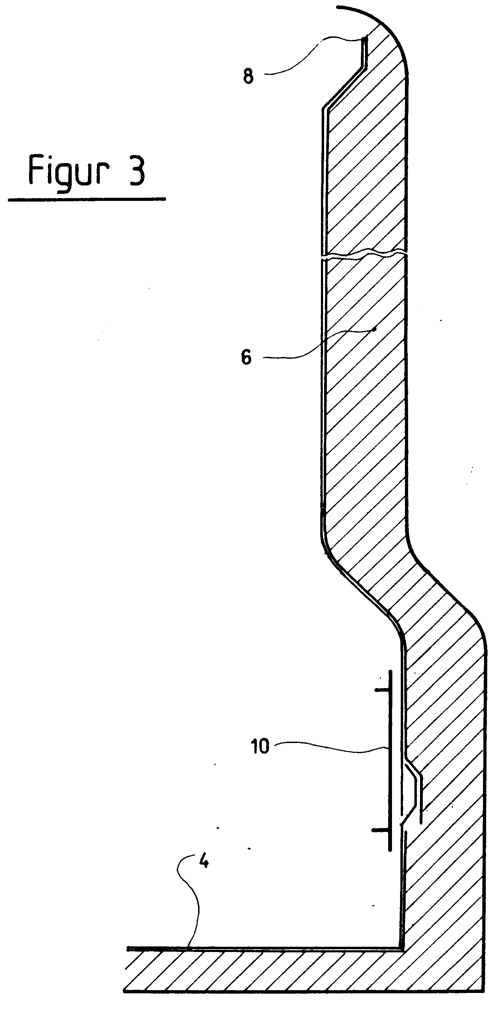

Fig. 3 zeigt nochmals einen Schnitt durch eine Seitenwandung, z.B. zum Führerhaus des Wagens hin. Die Auflagen (10) sind hierbei auf dem Seitenteil (3) wie in den Ansprüchen beschrieben fixiert.

Besonders bei Frischdienstfahrzeugen hat es sich als vorteilhaft herausgestellt, den Hohlraum zwischen dem Ausbausatz und dem Karosserieblech aus Isolationsgründen mit Steinwolle, Hartschaum usw. zu füllen. Versuche haben gezeigt, daß die Schichtstärke des Laminates vorteilhafterweise in der Größenordnung von 3 mm liegt, wobei sich ein Gesamtgewicht des Systems bei einem Transporter von ca. 80 kg ergibt.

Die Plattenmaterialien des Ausbausatzes haben eine glatte, leicht zu reinigende Oberfläche und bestehen aus den Hygienebestimmungen entsprechenden Kunststoffen, wie z.B. Polyester. Die Teile werden erfindungsgemäß mit Clipsen befestigt, so daß nach einem Unfall, beim Umrüsten oder im Rahmen des Recyclings entsprechend dem erfindungsgemäßen Baukastensystem ein Ausbau der Elemente möglich ist, ohne die Karosserie bzw. die Befestigungspunkte zu beschädigen. Der Ausbausatz kann ohne Schwierigkeiten wieder in ein Fahrzeug gleichen Typs bzw. gleicher Konzeption eingebaut werden.

### Bezugszeichenliste:

- 1): Kunststoffinnenauskleidung
- 2): Himmel
- 3): Seitenteile
- 4): Boden
- 5): Karosserie
- 6): Isolierung
- 7): Steck - Klemmverbindung
- 8): Überlappung
- 9): Einlegeboden
- 10): Auflagen
- 11): Einstiegselement
- 12): Radkasten
- 13): Türausschnitt

## Patentansprüche

1. Ausbausatz aus faserverstärkten Kunststoffen für Transportsysteme, der die Fixierung des Ausbausatzes an konstruktiv in der Karosserie vorhandenen Befestigungspunkten gestattet und worin die Seitenteile (3) den Himmel (2) überlappen, **dadurch gekennzeichnet**, daß Boden- (4) und Seitenteile (3) linienförmig umlaufend mittels einer Steck-Klemmverbindung (7) form- und reibschlüssig miteinander verbunden sind und die Übergänge zwischen den Elementen (2,3) spritzwassergeschützt sind.

2. Ausbausatz aus faserverstärkten Kunststoffen für Transportsysteme nach Anspruch 1, **dadurch gekennzeichnet**, daß das Bodenelement (4) seitlich hochgezogen ist.

3. Ausbausatz aus faserverstärkten Kunststoffen für Transportsysteme nach Anspruch 1 oder 2, **dadurch gekennzeichnet**, daß der Hohlraum zwischen dem Bausatz (2,3,4) und Karosserieblech (5) aus Isolationsgründen mit Hartschaum (6) gefüllt ist.

4. Ausbausatz aus faserverstärkten Kunststoffen für Transportsysteme nach einem oder mehreren der Ansprüche 1 bis 3, **dadurch gekennzeichnet**, daß der Hohlraum zwischen dem Bausatz (2,3,4) und Karosserieblech (5) mit Steinwolle (6) gefüllt ist.

5. Ausbausatz aus faserverstärkten Kunststoffen für Transportsysteme nach einem oder mehreren der Ansprüche 1 bis 4, **dadurch gekennzeichnet**, daß als Material faserverstärkte Kunststoffe in Laminatform eingesetzt werden.

6. Ausbausatz aus faserverstärkten Kunststoffen für Transportsysteme nach einem oder mehreren der Ansprüche 1 bis 5, **dadurch gekennzeichnet**, daß die Schichtstärke des Laminats etwa 3 mm beträgt.

7. Ausbausatz aus faserverstärkten Kunststoffen für Transportsysteme nach einem oder mehreren der Ansprüche 1 bis 6, **dadurch gekennzeichnet**, daß zur Vergrößerung der Transportfläche höhenverstellbare Einlegeböden (9) vorgesehen sind, deren Verstellmaß durch konstruktiv frei definierbare Raster vorgegeben ist.

8. Ausbausatz aus faserverstärkten Kunststoffen für Tansportsysteme nach einem oder mehreren der Ansprüche 1 bis 7, **dadurch gekennzeichnet**, daß als Wandmaterial den Hygienebestimmungen (z.B. FIHV) entsprechende Kunststoffe, vorzugsweise faserverstärkte, ungesättigte Polyester, eingesetzt werden.

9. Ausbausatz aus faserverstärkten Kunststoffen für Transportsysteme nach einem oder mehreren der Ansprüche 1 bis 8, **dadurch gekennzeichnet**, daß die Elemente (2,3,4) eine glatte, leicht zu reinigende Oberfläche besitzen.

10. Ausbausatz aus faserverstärkten Kunststoffen für Transportsysteme nach einem oder mehreren der Ansprüche 1 bis 9, **dadurch gekennzeichnet**, daß als Verbindungselemente VA-Schrauben, Spreizniete PA6 sowie handelsübliche Clips eingesetzt werden.

11. Ausbausatz aus faserverstärkten Kunststoffen für Transportsysteme nach einem oder mehreren der Ansprüche 1 bis 10, **dadurch gekennzeichnet**, daß die Einlegeböden (9) durch höhenverstellbare Auflagen (10) gehalten werden.

12. Ausbausatz aus faserverstärkten Kunststoffen für Transportsysteme nach einem oder mehreren der Ansprüche 1 bis 11, **dadurch gekennzeichnet**, daß das Einstiegselement (11) zur Erhöhung der Rutschfestigkeit mit einem ausgeformten Oberflächenraster und/oder einer definierten Oberflächenrauhigkeit versehen ist.

## Claims

1. A liner assembly of fiber-reinforced plastics for transport systems, which permits attachment of the interior finishing to fastening points provided in the design of the vehicle body, and where the side parts (3) overlap the roof liner (2), characterized in that the bottom parts (4) and side parts (3) are joined together peripherally by means of a push-lock connection (7) in a form-fitting and frictionally engaged manner, and the transitions between the elements (2, 3) are protected from splashing water.

2. A liner assembly of fiber-reinforced plastics for transport systems according to claim 1, characterized in that the bottom element (4) is upswept at the sides.

3. A liner assembly of fiber-reinforced plastics for transport systems according to claim 1 or 2, characterized in that the cavity between the kit (2, 3, 4) and the vehicle body plate (5) is filled with rigid foam (6) for insulation reasons.

4. A liner assembly of fiber-reinforced plastics for transport systems according to one or more of claims 1 to 3, characterized in that the cavity between the kit (2, 3, 4) and the vehicle body plate (5) is filled with rock wool.

5. A liner assembly of fiber-reinforced plastics for transport systems according to one or more of claims 1 to 4, characterized in that fiber-reinforced plastics in the form of laminates are used as the material.

6. A liner assembly of fiber-reinforced plastics for transport systems according to one or more of claims 1 to 5, characterized in that the layer thickness of the laminate is approximately 3 mm.

7. A liner assembly of fiber-reinforced plastics for transport systems according to one or more of claims 1 to 6, characterized in that adjustable-height shelves (9) are provided to increase the transport area, and their measure of adjustment is predetermined by grids that can be defined freely in the design.

8. A liner assembly of fiber-reinforced plastics for transport systems according to one or more of claims 1 to 7, characterized in that plastics which conform to hygiene requirements (e.g., FIHV), preferably fiber-reinforced unsaturated polyesters, are used as the wall material.

9. A liner assembly of fiber-reinforced plastics for transport systems according to one or more of claims 1 to 8, characterized in that the elements (2, 3, 4) have a smooth, easy-to-clean surface.

10. A liner assembly of fiber-reinforced plastics for transport systems according to one or more of claims 1 to 9, characterized in that VA screws, nylon-6 body-bound rivets and commercial clips are used as the connecting elements.

11. A liner assembly of fiber-reinforced plastics for transport systems according to one or more of claims 1 to 10, characterized in that the shelves (9) are held by adjustable-height supports (10).

12. A liner assembly of fiber-reinforced plastics for transport systems according to one or more of claims 1 to 11, characterized in that the entrance element (11) is provided with a molded surface grid and/or a defined surface roughness to impart a greater non-slip property.

## Revendications

1. Jeu d'éléments de revêtement en matériaux synthétiques renforcés de fibres pour systèmes de transport qui permet la fixation du jeu d'éléments de revêtement à des points de fixation existant de par la construction dans la carrosserie et dans lequel les parties latérales (3) chevauchent le ciel ou plafond (2), le jeu d'éléments de revêtement étant caractérisé en ce que la partie de fond (4) et les parties latérales (3) d'allure linéaire, sont reliées par une fixation par serrage à emboîtement (7) par adaptation de formes et à frottement et en ce que les transitions entre les éléments (2, 3) sont protégées de l'eau d'éclaboussement.

2. Jeu d'éléments de revêtement en matériaux synthétiques renforcés de fibres pour systèmes de transport suivant la revendication 1, caractérisé en ce que l'élément de fond (4) s'élève latéralement.

3. Jeu d'éléments de revêtement en matériaux synthétiques renforcés de fibres pour système de transport suivant l'une ou l'autre des revendications 1 et 2, caractérisé en ce que l'espace creux compris entre le jeu des éléments (2, 3, 4) et la tôle de carrosserie (5) est, pour des raisons d'isolation, rempli de matière expansée dure (6).

4. Jeu d'éléments de revêtement en matériaux synthétiques renforcés de fibres pour systèmes de transport suivant l'une ou plusieurs des revendications 1 à 3, caractérisé en ce que l'espace creux compris entre le jeu d'éléments (2, 3, 4) et la tôle de carrosserie est rempli de laine minérale.

5. Jeu d'éléments de revêtement en matériaux synthétiques renforcés de fibres pour systèmes de transport suivant l'une ou plusieurs des revendications 1 à 4, caractérisé en ce que, comme matières, il est utilisé des matières synthétiques renforcées de fibres sous forme laminée.

6. Jeu d'éléments de revêtement en matériaux synthétiques renforcés de fibres pour systèmes de transport suivant l'une ou plusieurs des revendications 1 à 5, caractérisé en ce que l'épaisseur de couche du laminat est d'environ 3 mm.

7. Jeu d'éléments de revêtement en matériaux synthétiques renforcés de fibres pour systèmes de transport suivant l'une ou plusieurs des revendications 1 à 6. caractérisé en ce que pour accroître la surface de transport, il a été prévu des fonds incorporés réglables en hauteur (9) dont la mesure de déplacement est donnée par des grilles pouvant être déterminées librement lors de la construction.

8. Jeu d'éléments de revêtement en matériaux synthétiques renforcés de fibres pour systèmes de transport suivant l'une ou plusieurs des revendications 1 à 7, caractérisé en ce que, comme matières de paroi, il est utilisé des matières synthétiques répondant aux dispositions d'hygiène (par exemple norme PIHV), de préférence des polyesters non saturés renforcés de fibres.

9. Jeu d'éléments de revêtement en matériaux synthétiques renforcés de fibres pour systèmes de transport suivant l'une ou plusieurs des revendications 1 à 8, caractérisé en ce que les éléments (2, 3, 4) présentent une surface lisse, facile à nettoyer.

10. Jeu d'éléments de revêtement en matériaux synthétiques renforcés de fibres pour systèmes de transport suivant l'une ou plusieurs des revendications 1 à 9, caractérisé en ce que, comme éléments de fixation, il est utilisé des vis VA, des rivets écartement PA6, ainsi que des clips répandus dans le commerce.

11. Jeu d'éléments de revêtement en matériaux synthétiques renforcés de fibres pour systèmes de transport suivant l'une ou plusieurs des revendications 1 à 10, caractérisé en ce que les fonds incorporés (9) sont maintenus par des supports réglables en hauteur (10).

12. Jeu d'éléments de revêtement en matériaux synthétiques renforcés de fibres pour systèmes de transport suivant l'une ou plusieurs des revendications 1 à 11 caractérisé en ce que la marche (11), pour accroître la sécurité contre le glissement, comporte un réseau grillagé superficiel et/ou présente une rugosité de surface déterminée,
